# FASCICULE DE BREVET EUROPEEN

(11) **EP 1 744 936 B1**
(45) Date de publication et mention de la délivrance du brevet: **09.07.2008**
(21) Numéro de dépôt: 05770863.8
(22) Date de dépôt: 12.05.2005
(51) Int. Cl.: B60R 19/48, B60R 21/01

(54) **DISPOSITIF D'EVALUATION D'EFFORTS DANS UN PARE-CHOCS D'UN VEHICULE AUTOMOBILE, UTILISANT PLUSIEURS CAPTEURS**
VORRICHTUNG ZUR DEFORMATIONSKALKULATION BEI STOSSFÄNGERN VON KRAFTFAHRZEUGEN UNTER VERWENDUNG MEHRERER SENSOREN
DEVICE FOR EVALUATING STRAIN IN THE BUMPER OF A MOTOR VEHICLE, USING SEVERAL SENSORS

(30) Priorité: 13.05.2004 FR 0405228
(43) Date de publication de la demande: 24.01.2007
(73) Titulaire: COMPAGNIE PLASTIC OMNIUM, 69007 Lyon (FR)
(72) Inventeur: ROUX, Jean-Pierre, F-69480 Pommiers (FR)
(74) Mandataire: Remy, Vincent Noel Paul
(86) Numéro de dépôt international: PCT/FR2005/001194
(87) Numéro de publication internationale: WO 2005/115803

(56) Documents cités:
- WO-A-03/082639
- WO-A-20/04058545

## Description

La présente invention concerne un dispositif d'évaluation d'efforts dans un pare-chocs d'un véhicule automobile selon la préambule de la revendication 1. Un tel dispositif est connu de WO 03/082639.

Afin d'assurer la sécurité d'un piéton lors d'un choc avec un véhicule automobile, on prévoit en général des dispositifs de protection, agencés sur le véhicule automobile, destinés à limiter les dommages corporels subis par le piéton.

En particulier, il existe des dispositifs de protection passifs, tels que des poutres basses ou des absorbeurs d'énergie pour le choc tête, et des dispositifs de protection actifs, tels que des ballons gonflants externes ou des organes de levage de capot.

Les dispositifs de protection actifs se déclenchent généralement de manière irréversible en cas de choc. Ils sont souvent à usage unique, et sont quelquefois destructeurs pour leur environnement immédiat. Il est donc préférable que ces dispositifs ne s'activent pas pour tout choc, mais seulement en cas de choc avec un piéton.

On connaît déjà, dans l'état de la technique, un dispositif d'évaluation d'efforts dans un pare-chocs d'un véhicule automobile, muni d'uri moyen de discrimination de chocs.

Au moment d'un choc, les moyens de discrimination permettent de déterminer si ce choc correspond à un choc avec un piéton, c'est à dire que l'effort correspondant à ce choc dépasse un seuil prédéterminé. Dans ce cas, les dispositifs de protection actifs sont activés. Ainsi, les dispositifs de protection actifs ne sont activés qu'à bon escient.

On sait par ailleurs que la raideur d'un pare-chocs dépend de sa température, de sorte quo l'effort mesuré par un capteur intégré au parc-chocs varie avec cette température.

Ainsi, pour un même choc, l'effort mesuré est moindre lorsque le pare-chocs 25 est à basse température que lorsqu'il est à haute température. Par conséquent, le seuil prédéterminé doit être plus élevé à haute température qu'à basse température.

Certains dispositifs d'évaluation d'efforts de l'état de la technique prennent ainsi en compte la température du pare-chocs et compensent ses effets en faisant varier le seuil prédéterminé en conséquence. Cependant, de tels dispositifs d'évaluation d'efforts sont souvent coûteux en raison de leurs structures complexes.

L'invention a notamment pour but de remédier à cet inconvénient en fournissant un dispositif d'évaluation d'efforts économique, susceptible de prendre en compte la température du pare-chocs.

A cet effet, l'invention a pour objet un dispositif d'évaluation d'efforts dans un pare-chocs d'un véhicule automobile, muni d'un moyen de discrimination de chocs, caractérisé en ce qu'il comporte au moins deux capteurs d'effort empilés selon la direction longitudinale du véhicule, chaque capteur étant du type binaire, c'est-à-dire qu'il signale lorsque l'effort qu'il subit dépasse un seuil prédéterminé propre au capteur, les capteurs ayant des seuils prédéterminés différents.

Au sens de la présente invention, le terme « effort » désigne toute grandeur physique traduisant et quantifiant une sollicitation mécanique. Cette grandeur physique peut être non seulement une force mais également une pression ou encore une autre grandeur.

Chaque capteur de type binaire n'est activé que lorsque l'effort correspondant au choc dépasse un certain seuil, propre à ce capteur. Ainsi, en agençant chaque capteur de manière à ce que son seuil corresponde à un choc avec un piéton dans une certaine plage de températures, par exemple un capteur pour les basses températures (entre -30° et 23°C) et un capteur pour les hautes températures (entre 23°C et 85°C), il est possible de discriminer les chocs avec un piéton en prenant en compte uniquement le capteur correspondant à la température du pare-chocs au moment du choc.

Une autre application possible de l'invention est de recourir à au moins deux capteurs pour discriminer entre des chocs se produisant à différentes vitesses de déplacement du véhicule. En effet, un choc contre un même obstacle à 30 km/h et à 40 km/h engendre deux mesures d'efforts différentes, alors que ce même obstacle doit être caractérisé ou non comme piéton, indépendamment de la vitesse du véhicule (à condition toutefois que cette vitesse ne rende pas inutile toute protection active du piéton).

Grâce à l'invention, on peut prendre en compte la vitesse de déplacement du véhicule pour ne tenir compte que du signal provenant du capteur le plus significatif à cette vitesse et ainsi éviter qu'un obstacle trop léger, et par conséquent ne devant être caractérisé comme piéton, ne le soit à tort du seul fait qu'il entre en collision avec le véhicule à une vitesse élevée.

Par ailleurs, les capteurs de type binaire étant peu coûteux, Ta combinaison d'au moins deux de ces capteurs forme un dispositif d'évaluation d'efforts économique.

Suivant d'autres caractéristiques optionnelles du dispositif d'évaluation d'efforts selon l'invention :
- les capteurs d'effort sont agencés dans le pare-chocs;
- les capteurs d'effort sont agencés derrière un absorbeur du pare-chocs;
- les capteurs d'effort sont agencés de manière à ce qu'un capteur fournisse un même signal pour un effort appliqué de manière identique à deux endroits différents du pare-chocs;
- les capteurs d'effort sont agencés dans une gorge ménagée dans le pare-chocs;
- le dispositif d'évaluation d'efforts comporte un capteur de température intégré dans le pare-chocs;
- le dispositif d'évaluation d'efforts comporte un dispositif pour prendre en compte uniquement le signal émis par un seul des capteurs d'effort, le choix du capteur dont le signal est pris en compte dépendant de la température et/ou de la vitesse de déplacement du véhicule;
- le dispositif pour prendre en compte uniquement le signal émis par un seul des capteurs d'effort comporte un dispositif d'inhibition des signaux émis par les autres capteurs.

L'invention sera mieux comprise à la lecture de la description qui va suivre, donnée uniquement à titre d'exemple et faite en se référant aux dessins annexés dans lesquels:
- la figure 1 est un éclaté d'un pare-chocs comportant un dispositif d'évaluation d'efforts selon l'invention
- la figure 2 est une section selon II-II de la figure 1 du dispositif d'évaluation d'efforts;
- la figure 3 est un graphe représentant l'évolution de l'effort minimal déclenchant en fonction de la température du pare-chocs.

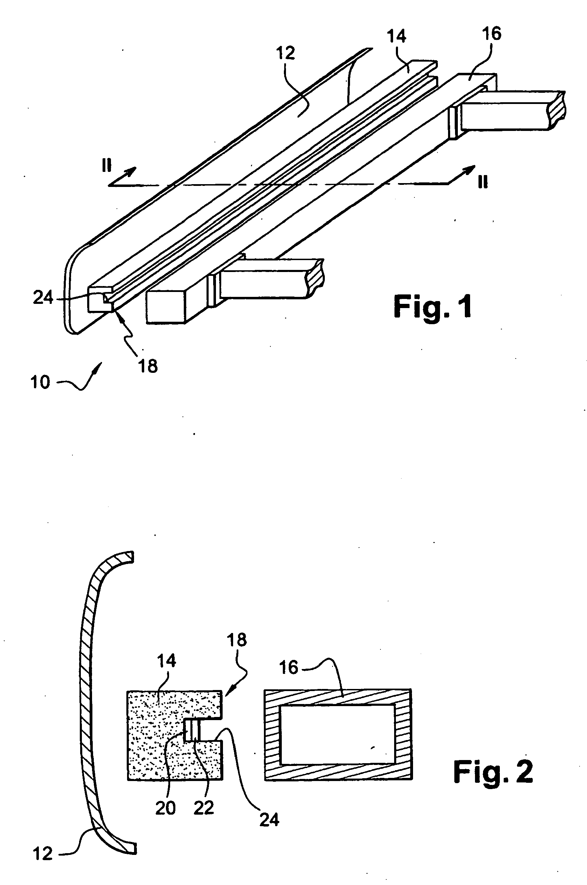

On a représenté sur la figure 1 un pare-chocs d'un véhicule automobile, 20 désigné par la référence générale 10.

Le pare-chocs 10 comporte une peau de pare-chocs 12, un absorbeur 14 et une traverse métallique 16.

Le véhicule automobile est en outre muni d'un dispositif 18 d'évaluation d'efforts dans le pare-chocs 10.

Ce dispositif d'évaluation d'efforts 18 est muni de moyens de discrimination de chocs, notamment destinés à déterminer si un choc subit par le pare-chocs est un choc avec un piéton.

Le dispositif d'évaluation d'efforts 18 est relié à au moins un dispositif de protection actif (non représenté); afin de commander son activation en cas de choc avec un piéton.

Les moyens de discrimination de chocs comportent au moins deux capteurs d'efforts 20 et 22, empilés selon la direction longitudinale du véhicule.

Dans l'exemple décrit, les capteurs d'efforts 20 et 22 forment chacun une bande s'étendant selon la direction transversale du véhicule, Ils sont agencés dans le pare-chocs 10, derrière l'absorbeur 14 de ce pare-chocs 10, dans une gorge 24 ménagée dans cet absorbeur 14.

Chacun de ces capteurs est du type binaire, c'est-à-dire qu'il est uniquement apte à signaler lorsque l'effort qu'il subit, correspondant à un choc, dépasse un seuil prédéterminé qui lui est propre. Les capteurs 20 et 22 ont des seuils prédéterminés différents.

Le dispositif 18 d'évaluation d'efforts comporte en outre un dispositif pour prendre en compte uniquement le signal émis par un seul des capteurs d'efforts 20 ou 22, comportant notamment un dispositif d'inhibition (non représenté) des signaux émis par l'autre capteur. Le choix du capteur dont le signal est pris en compte dépend par exemple de la température du pare-chocs 10, qui est en général fournie par un capteur de température intégré dans ce pare-chocs 10.

Par exemple, le premier capteur 20 est destiné à être pris en compte lorsque le pare-chocs est à basse température, et le second capteur 22 est destiné à être pris en compte lorsque le pare-chocs est à haute température.

Ainsi, dans cet exemple, le seuil prédéterminé du capteur 20 est inférieur au seuil prédéterminé du capteur 22.

Dans la présente invention, l'expression « à basse température », respectivement « à haute température », signifie que la température considérée se trouve dans une plage de températures supérieure, respectivement inférieure, à une valeur limite prédéfinie, par exemple 15°C.

Lorsque, à haute température, le pare-chocs subit un choc dont l'effort correspondant est supérieur au seuil prédéterminé du second capteur 22, les deux capteurs fournissent un signal de dépassement de leurs seuils d'effort respectifs mais seul le signal provenant du second capteur 22 est pris en compte, l'autre signal étant inhibé. En conséquence, l'effort est considéré comme caractéristique d'un choc piéton et on déclenche le dispositif de protection actif.

En revanche, lorsque, toujours à haute température, le pare-chocs subit un choc dont l'effort correspondant est inférieur au seuil prédéterminé du second capteur 22, ce second capteur 22 ne fournit pas de signal de dépassement de son seuil d'effort et on considère qu'il ne s'agit pas d'un choc avec un piéton. De ce fait, on ne déclenche pas le dispositif de protection actif, quelque soit le signal fourni par le premier capteur 20.

Symétriquement, à basse température, le dispositif d'évaluation d'efforts prend uniquement en compte le signal émis par le premier capteur 20, les signaux provenant par le capteur 22 étant inhibés. Ainsi, tant que l'effort correspondant au choc est inférieur au seuil prédéterminé du premier capteur 20, on considère que le choc n'est pas un choc avec un piéton.

Le mode d'inhibition d'un signal est laissé au choix de l'homme du métier, parmi les nombreuses possibilités connues, comme par exemple celles consistant à court-circuiter, filtrer, ignorer ou annuler ledit signal ou son courant porteur.

Bien entendu, on pourra utiliser plus de deux capteurs afin par exemple de 5 discriminer les chocs sur plus de deux différentes plages de température.

On pourra aussi prévoir d'autres capteurs binaires pour prendre en compte d'autres paramètres que la température, tels que la vitesse du véhicule automobile. Dans ce cas, plusieurs capteurs sont pris en compte dans une même plage de température, mais pour des vitesses du véhicule différentes.

On notera par ailleurs que les capteurs d'efforts 20 et 22 sont agencés le long de l'absorbeur 14 de manière à ce qu'un capteur fournisse un même signal pour un effort appliqué de manière identique à deux endroits différents du pare-chocs. Il est en effet important que le dispositif d'évaluation d'efforts permette de discriminer tous les chocs de la même manière quelle que soit la zone d'impact sur le pare-chocs.

En fonction de la forme du véhicule, certaines zones de l'absorbeur 14 n'absorbent pas les efforts de la même manière que d'autres. Il est donc préférable de prévoir une profondeur variable pour la gorge 24 dans laquelle sont agencés les capteurs d'efforts. On choisira donc un profilé de la gorge 24 tel que les efforts mesurés en tout point pour un même choc sont égaux.

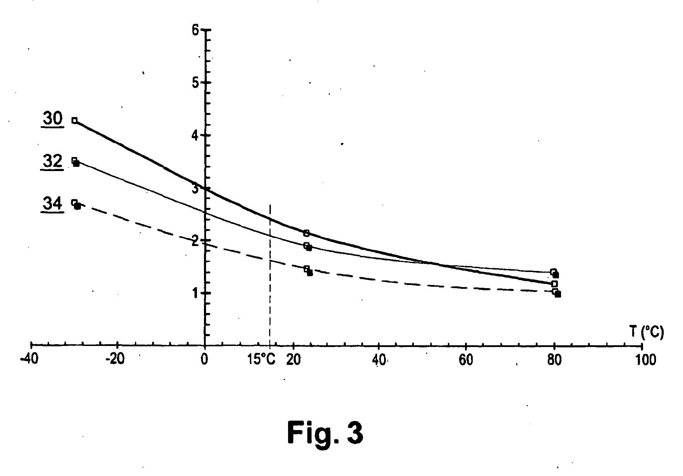

Sur la figure 3, on s représenté l'évolution de l'effort minimal déclenchant en fonction de la température du pare-chocs, cette température pouvant varier entre -30°C et +85°C. Cet effort est celui qu'engendrerait un piéton ayant le gabarit le plus petit parmi tous ceux susceptibles de profiter d'une protection en cas d'activation des dispositifs de protection active.

Par exemple, pour un modèle donné de pare-chocs, un enfant de trop petite taille ne pourrait pas bénéficier de la protection active, car il n'atteindrait pas les zones d'impact prévues, et le gabarit le plus petit serait celui d'un enfant de onze ans, auquel correspond un poids moyen connu.

Dans ce cas, la courbe 30 montre l'évolution, en fonction de la température, 30 de l'effort engendré par un impact d'un enfant de onze ans, à une vitesse donnée, contre le pare-chocs.

Sur ce même graphe, on s représenté les seuils d'efforts 32 et 34 de deux capteurs différents, c'est-à-dire les seuils au-dessus desquels chaque capteur fournit un signal de dépassement et en dessous desquels chaque capteur ne fournit pas de tel signal. On voit qu'entre -30°C et +52°C, le seuil 32 borde inférieurement la courbe 30, puis qu'il la coupe à partir de ÷52°C, et que le seuil 34 demeure inférieur à la courbe 30 entre -30°C et +80°C.

Conformément à l'invention, en ne retenant que le signal provenant du premier capteur jusqu'à +15°C (température à laquelle l'écart entre la courbe 32 et la courbe 30 ne fourni une marge de sécurité suffisante), puis le signal provenant du second capteur au-delà de cette température, on discrimine les obstacles de manière simple et efficace tout en tenant compte des variations de température du pare-chocs.

Il est bien entendu que les modes de réalisation qui viennent d'être décrits ne présentent aucun caractère limitatif et peuvent recevoir toute modification désirable sans pour cela sortir du cadre de l'invention.

En particulier, comme on le voit sur la figure 3, on pourrait utiliser un troisième capteur dont le seuil d'effort borderait inférieurement la courbe 30 entre 60°C et 80°C de manière à conserver une marge de sécurité suffisante. Dans ce cas, le dispositif salon l'invention connaîtrait trois plages de température.

## Revendications

1. Dispositif (18) d'évaluation d'efforts dans un pare-chocs (10) d'un véhicule automobile, muni de moyens de discrimination de chocs, comportant au moins deux capteurs d'effort (20, 22), chaque capteur (20, 22) étant du type binaire, c'est-à-dire qu'il signale lorsque l'effort qu'il subit dépasse un seuil prédéterminé propre au capteur (20, 22), **caractérisé en ce que** les capteurs (20, 22) sont empilés selon la direction longitudinale du véhicule et ont des seuils prédéterminés différents.

2. Dispositif (18) d'évaluation d'efforts selon la revendication 1, dans lequel les capteurs d'effort (20, 22) sont agencés dans le pare-chocs (10).

3. Dispositif (18) d'évaluation d'efforts selon la revendication 2, dans lequel les capteurs d'effort (20, 22) sont agencés derrière un absorbeur (14) du pare-chocs (10).

4. Dispositif (18) d'évaluation d'efforts selon la revendication 2 ou 3, dans lequel les capteurs d'effort (20, 22) sont agencés de manière à ce qu'un capteur (20, 22) fournisse un même signal pour un effort appliqué de manière identique à deux endroits différents du pare-chocs (10).

5. Dispositif (18) d'évaluation d'efforts selon la revendication 4, dans lequel les capteurs d'effort (20, 22) sont agencés dans une gorge (24) ménagée dans le pare-chocs (10).

6. Dispositif (18) d'évaluation d'efforts selon l'une quelconque des revendications 1 à 5, comportant un capteur de température intégré dans le pare-chocs (10).

7. Dispositif (18) d'évaluation d'efforts selon l'une quelconque des revendications 1 à 6, comportant un dispositif pour prendre en compte uniquement le signal émis par un seul des capteurs d'effort (20, 22), le choix du capteur (20, 22) dont le signal est pris en compte dépendant de la température et/ou de la vitesse de déplacement du véhicule.

8. Dispositif (18)' d'évaluation d'efforts selon la revendication 7, dans lequel le dispositif pour prendre en compte uniquement le signal émis par un seul des capteurs (20, 22) d'effort comporte un dispositif d'inhibition des signaux émis par les autres capteurs (20, 22).

## Claims

1. A device (18) for evaluating forces in a motor vehicle bumper (10), provided with impact discrimination means, the device comprising at least two force sensors (20, 22), each sensor (20, 22) being of the binary type, i.e. it signals when the force to which it is subjected exceeds a predetermined threshold specific to the sensor (20, 22), the device being **characterized in that** the sensors (20, 22) are stacked in the longitudinal direction of the vehicle and have predetermined thresholds that are different.

2. A force evaluation device (18) according to claim 1, in which the force sensors (20, 22) are arranged in the bumper (10).

3. A force evaluation device (18) according to claim 2, in which the force sensors (20, 22) are arranged behind an absorber (14) of the bumper (10).

4. A force evaluation device (18) according to claim 2 or claim 3, in which the force sensors (20, 22) are arranged in such a manner that a sensor (20, 22) delivers the same signal for a force applied in identical manner to two different locations of the bumper (10).

5. A force evaluation device (18) according to claim 4, in which the force sensors (20, 22) are arranged in a groove (24) formed in the bumper (10).

6. A force evaluation device (18) according to any one of claims 1 to 5, including a temperature sensor integrated in the bumper (10).

7. A force evaluation device (18) according to any one of claims 1 to 6, including a device for taking account solely of the signal issued by a single one of the force sensors (20, 22), the sensor (20, 22) from which the signal is taken into account being selected depending on the temperature and/or the travel speed of the vehicle.

8. A force evaluation device (18) according to claim 7, in which the device for taking account solely of the signal issued by a single one of the force sensors (20, 22) comprises a device for inhibiting signals issued by the other sensors (20, 22).

## Patentansprüche

1. Vorrichtung (18) zur Belastungsbewertung in einem Stoßfänger (10) eines Kraftfahrzeugs, ausgestattet mit Mitteln zur Unterscheidung von Aufprallen, umfassend wenigstens zwei Belastungssensoren (20, 22), wobei jeder Sensor (20, 22) binär ausgeführt ist, d. h. er gibt ein Signal aus, wenn die Belastung, der er ausgesetzt ist, eine entsprechend dem Sensor (20, 22) definierte Schwelle überschreitet, **dadurch gekennzeichnet, dass** die Sensoren (20, 22) in der Längsrichtung des Fahrzeugs aneinandergereiht sind und unterschiedlich definierte Schwellen aufweisen.

2. Vorrichtung (18) zur Belastungsbewertung nach Anspruch 1, wobei die Belastungssensoren (20, 22) im Stoßfänger (10) angeordnet sind.

3. Vorrichtung (18) zur Belastungsbewertung nach Anspruch 2, wobei die Belastungssensoren (20, 22) hinter einem Absorber (14) des Stoßfängers (10) angeordnet sind.

4. Vorrichtung (18) zur Belastungsbewertung nach Anspruch 2 bzw. 3, wobei die Belastungssensoren (20, 22) so angeordnet sind, dass ein Sensor (20, 22) für eine auf identische Weise an zwei unterschiedlichen Stellen des Stoßfängers (10) einwirkende Belastung ein gleiches Signal bereitstellt.

5. Vorrichtung (18) zur Belastungsbewertung nach Anspruch 4, wobei die Belastungssensoren (20, 22) in einer im Stoßfänger (10) angebrachten Nut (24) angeordnet sind.

6. Vorrichtung (18) zur Belastungsbewertung nach einem der Ansprüche 1 bis 5, umfassend einen in den Stoßfänger (10) integrierten Temperatursensor.

7. Vorrichtung (18) zur Belastungsbewertung nach einem der Ansprüche 1 bis 6, umfassend eine Vorrichtung zur Berücksichtigung von ausschließlich dem von einem einzigen der Belastungssensoren (20, 22) ausgegebenen Signal, wobei die Wahl des Sensors (20, 22), dessen Signal berücksichtigt wird, von der Temperatur und/oder der Geschwindigkeit der Fortbewegung des Fahrzeugs abhängt.

8. Vorrichtung (18) zur Belastungsbewertung nach Anspruch 7, wobei die Vorrichtung zur Berücksichtigung von ausschließlich dem von einem einzigen der Belastungssensoren (20, 22) ausgegebenen Signal eine Vorrichtung zum Sperren der von den anderen Sensoren (20, 22) ausgegebenen Signale umfasst.
